# EUROPEAN PATENT APPLICATION

(11) **EP 1 534 001 A2**
(43) Date of publication of application: **25.05.2005**
(21) Application number: 04105226.7
(22) Date of filing: 21.10.2004
(51) Int. Cl.: H04N 5/232

(54) **A Camera and Controller therefor**

(30) Priority: 18.11.2003 KR 2003081547
(71) Applicant: Samsung Electronics Co., Ltd., Suwon-si, Gyeonggi-Do 442-742 (KR)
(72) Inventor: KIM, Hak-je, Gyeonggi-do (KR); Park, Hye-young, Gyeonggi-do, (KR)
(74) Representative: Geary, Stuart Lloyd

(57) **Abstract**

A photographing system capable of controlling a photographing device by combining a plurality of remote control signals output from a remote controller and a control method thereof. The photographing system includes a photographing part for outputting an image signal, an input part provided with first and second manipulation buttons for inputting first and second control commands, respectively, by selecting at least one of the first and second manipulation buttons, and a control part for controlling the photographing part in accordance with any one of the first and second control commands if the corresponding one of the first and second manipulation buttons is selected, and controlling the photographing part in accordance with a third control command if both the first and second manipulation buttons are selected.

## Description

The present invention relates to a camera system comprising a camera; and a controller for said camera comprising user input means and a plurality of control signal lines which can each adopt a plurality of active states and a neutral state in dependence on the operation of the user input means.

With the development of data transmission technology, an image photographed by and transmitted from an installed camera can be viewed remotely from the camera. For example, a CCTV camera may be installed in an area where security is required or in a crime hot-spot, and a security officer in his or her office (in a different place) may monitor the area. Also, a camera may be installed in an area having a high traffic density, and a supervisor in a central control office may check the road capacity of the area by monitoring the traffic of the area. These camera and control arrangements are sometimes referred to as a photographing or surveillance system.

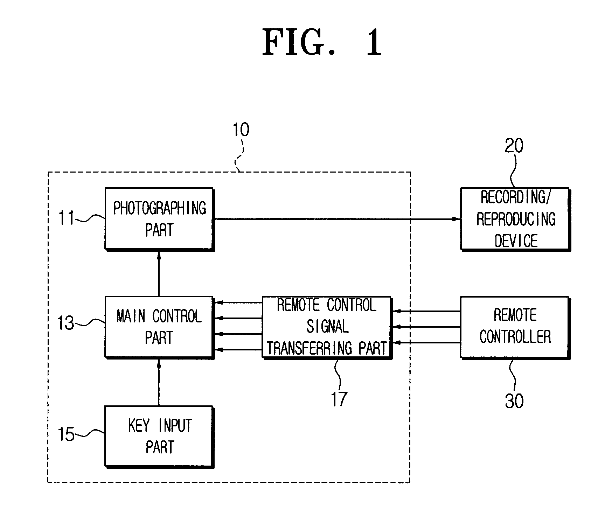

Figure 1 is a block diagram of a known surveillance system. As shown in Figure 1, the known surveillance system includes a camera (photographing device) 10, a recording/reproducing device 20, and a remote controller 30.

The camera 10 provides an image signal, created by capturing an image, to the recording/reproducing device 20, and controls respective modules in accordance with a user's control commands provided via a keypad (key input part) 15 or the remote controller 30. The camera 10 includes an image capture unit (photographing part) 11, a main control part 13, the keypad 15, and a remote control signal controller (remote control transferring part) 17.

The image capture unit 11 captures the image of the object, and provides the image signal to the recording/reproducing device 20 under the control of the main control part 13.

The main control part 13 receives the user's control commands through the keypad 15 or the remote controller 30, and controls the operation of the image capture unit 11 accordingly.

The remote control signal controller 17 provides remote control signals output from the remote controller 30 to the main control part 13.

The recording/reproducing device 20 receives the image signal output from the image capture unit 10, and displays the images on a display or records the images on a recording medium for viewing later or archiving.

The remote controller 30 is provided so that the user can input the control commands to the image capture unit 10 from a remote location. The remote controller 30 is provided with a plurality of buttons. The buttons are configured so that different control commands may be input.

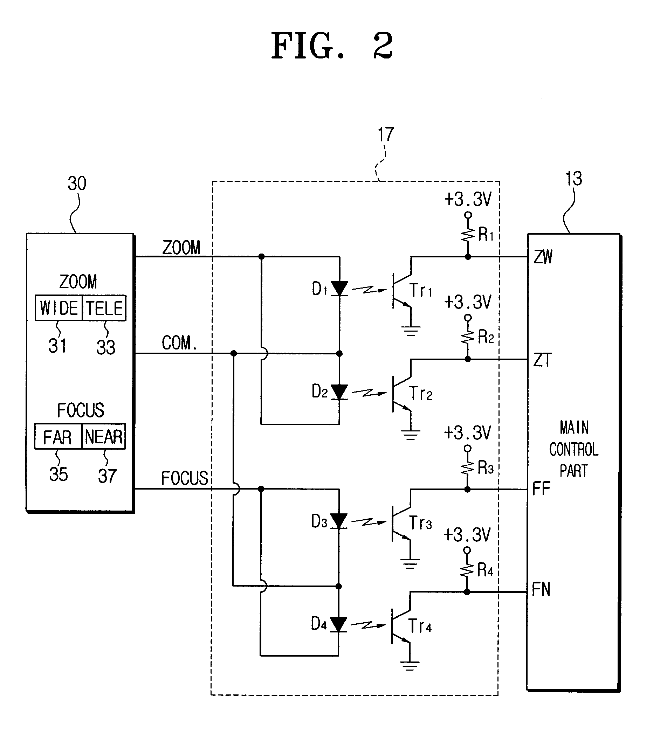

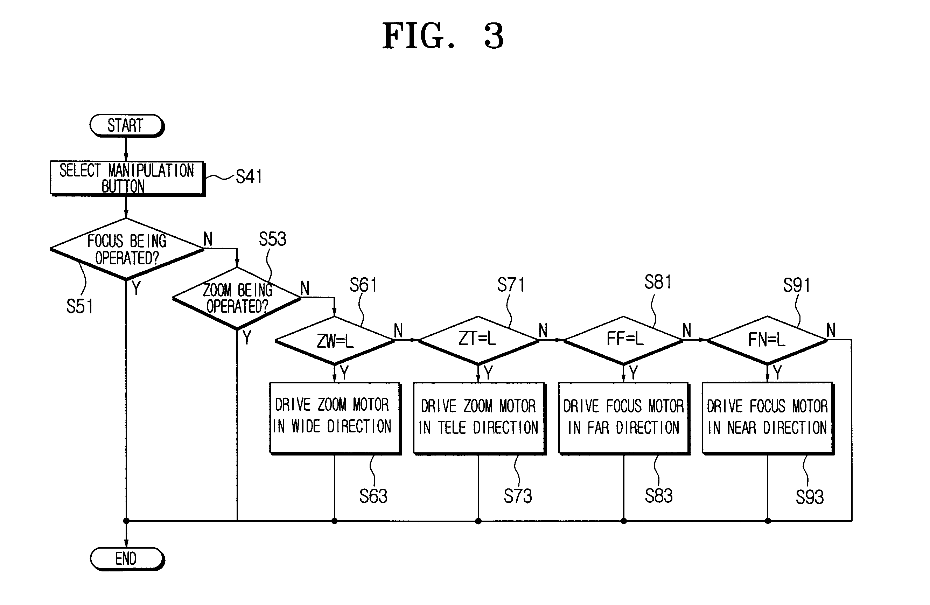

Hereinafter, the process of transferring control commands input by the user through the remote controller 30 to the main control part 13, and the process of controlling the image capture part 11, using the main control part 13, will be described in greater detail referring to Figures 2 and 3.

Figure 2 is a schematic diagram illustrating the process of transferring remote control signals output from the remote controller 30 of Figure 1, through the remote control signal controller 17, to the main control part 13. In Figure 2, the remote controller 30 is provided with a "WIDE" button 31 for zooming-out, a "TELE" button 33 for zooming-in, a "FAR" button 35 for focussing in on an object in the far distance, and a "NEAR" button 37 for focussing in on an object in the near distance.

The remote control signal controller 17 is provided with three terminals, i.e., "Zoom", "Com." and "Focus" terminals, for receiving the remote control signals provided by the remote controller 30. The main control part 13 is provided with four terminals "ZW (Zoom_Wide)", "ZT (Zoom_Tele)", "FF (Focus_Far)" and "FN (Focus_Near)" for receiving digital signals provided by the remote control signal controller 17.

If the user selects the "WIDE" button 31, a voltage of +5V is applied between the "Zoom" and "Com." terminals of the remote control signal controller 17. Accordingly, only the first light emitting diode (LED) D₁ and corresponding first phototransistor Tr₁ are turned on. This causes a logic level low signal to be input to the "ZW" port of the main control part 13. In this case, the second to fourth light emitting diodes LEDS D₂ to D₄, and the corresponding second to fourth phototransistors Tr₂ to Tr₄ are turned off, which causes a logic level high signal to be input to the "ZT", "FF" and "FN" terminals of the main control part 13.

If the user selects the "TELE" button 33, a voltage of -5V is applied between the "Zoom" and "Com." terminals of the remote control signal controller 17. Accordingly, only the second LED D₂ and the corresponding second phototransistor Tr₂ are turned on. This causes a logic level low signal to be input to the "ZT" port of the main control part 13. In this case, the first, third and fourth LEDS D₁, D₃ and D₄, and the corresponding first, third and fourth phototransistors Tr₁, Tr₃ and Tr₄ are turned off, thus causing a logic level high signal to be input to the "ZW", "FF" and "FN" terminals of the main control part 13.

If the user selects the "FAR" button 35, a voltage of +5V is applied between the "Focus" and "Com." terminals of the remote control signal controller 17. Accordingly, only the third LED D₃ and the corresponding third phototransistor Tr₃ are turned on. This causes a logic level low signal to be input to the "FF" port of the main control part 13. In this case, the first, second and fourth LEDS D₁, D₂ and D₄, and the corresponding first, second and fourth phototransistors Tr₁, Tr₂ and Tr₄ are turned off, thus causing a logic level high signal to be input to the "ZW", "ZT" and "FN" terminals of the main control part 13.

If the user selects the "NEAR" button 37, a voltage of -5V is applied between the "Focus" and "Com." terminals of the remote control signal controller 17. Accordingly, only the fourth LED D₄ and the corresponding fourth phototransistor Tr₄ are turned on. This causes a logic level low signal to be input to the "FN" port of the main control part 13. In this case, the first to third LEDS D₁ to D₃, and the corresponding first to third phototransistors Tr₁ to Tr₃ are turned off, thus causing a logic level high signal to be input to the "ZW", "ZT" and "FF" terminals of the main control part 13.

As described above, the logic levels input to the four terminals "ZW", "ZT", "FF" and "FN" of the main control part 13 are controlled in accordance with the voltages applied between the "Zoom" and "Com." terminals, or between the "Focus" and "Com." terminals. Table 1 shows examples of this.

**Table 1**

| Input Terminals of Remote Control Signal Transferring Part 17 | Input Voltage (V) between terminals | Logic Levels Input to Main Control Part 13 | | | |
|---|---|---|---|---|---|
| | | ZW | ZT | FF | FN |
| Zoom Com. | +5 | L | H | - | - |
| | -5 | H | L | - | - |
| | 0 | H | H | - | - |
| Focus Com. | +5 | - | - | L | H |
| | -5 | - | - | H | L |
| | 0 | - | - | H | H |

Figure 3 is a flowchart explaining the process of controlling the image capture unit 11 by selecting appropriate buttons 31 to 37 on a remote controller 30. Referring to Figure 3, if the user selects any one of the buttons 31 to 37 provided on the remote controller 30 to input a control command to the camera 10, a logic level low signal is input to the corresponding one of the four terminals "ZW", "ZT", "FF" and "FN" of the main control part 13 as shown in Figure 2 at step S41. At this time, if the image capture unit 11 is performing a focusing operation or a zooming operation, the control command input by the user is disregarded in order to continue the focusing operation or the zooming operation being performed at steps S51 and S53.

If the image capture unit 11 is not performing the focusing operation or the zooming operation, the main control part 13 performs the control command corresponding to the selected button. The control command is shown at steps S61 to S93.

If the user selects the "WIDE" button 31 at step S41 and so a logic level low signal is input to the "ZW" terminal of the main control part 13 at step S61, the main control part 13 zooms-out by driving a zooming motor provided in the image capture unit 11 in a direction defined as "Wide". This occurs at step S63.

If the user selects the "TELE" button 33 at step S41 and so a logic level low signal is input to the "ZT" terminal of the main control part 13 at step S71, the main control part 13 zooms-in by driving the zooming motor provided in the image capture unit 11 in a direction defined as "Tele". This occurs at step S73.

If the user selects the "FAR" button 35 at step S41 and so a logic level low signal is input to the "FF" terminal of the main control part 13 at step S81, the main control part 13 focuses in on an object in the far distance by driving a focusing motor provided in the image capture unit 11 in a direction defined as "Far". This occurs at step S83.

If the user selects the "NEAR" button 37 at step S41 and so a logic level low signal is input to the "FN" terminal of the main control part 13 at step S91, the main control part 13 focuses in on an object in the near distance by driving the focusing motor provided in the image capture unit 11 in a direction defined as "Near". This occurs at step S93.

As described above, according to the known surveillance system, the user can input control commands for the zooming function and the focusing function of the camera 10 using a remote controller 30. However, the control commands, which are input by the user using the remote controller 30, are limited to the zooming function and the focusing function, and the user must use the keypad 15 provided in the camera 10 in order to input other control commands. Accordingly, in the event that the camera 10 is located in a remote location, such as on a ceiling of a building, it is difficult for the user to directly use the key pad 15.

To overcome this problem, separate equipment is installed enabling control commands to be input using a serial communication connection between a user's PC and the camera 10. However, this causes the surveillance system to become complicated and have an increased cost.

The number of buttons on the remote controller 30 may be increased in order to accommodate more control commands. However, if the main control part 13 has a limited number of ports allocated to receive the remote control signals, it is difficult to increase the number of buttons on the remote controller 30.

Accordingly, a need exists for a surveillance system, and associated method, capable of receiving an increased number of control commands, both locally and remotely, without requiring an increase in the number of ports allocated to receive the remote control signals.

The present invention has been developed in order to solve the above drawbacks and other problems associated with the conventional arrangement. An object of the present invention is to provide a photographing system capable of inputting control commands to a photographing device using a remote controller provided with a plurality of manipulation buttons and a control method thereof, which enables the photographing device to perform a control operation in accordance with a new control command. The control command can be provided by combining a plurality of remote control signals input to the photographing device by simultaneously selecting the plurality of manipulation buttons.

The present invention relates to a camera system comprising a camera; and a controller for said camera comprising user input means and a plurality of control signal lines which can each adopt a plurality of active states and a neutral state in dependence on the operation of the user input means.

A camera system according to the present invention is characterised in that the camera is configured to be responsive to a plurality of said control signal lines being in active states concurrently to enter temporarily a secondary command input mode in which the camera is responsive to individual ones of said control lines being in the active states to perform an associated function, said associated function being different from a function associated with the same individual control line state when the camera is not in said secondary command input mode.

This is advantageous because extra functionality can be provided to the camera within the system without increasing either the number of buttons on the remote keypad or the number of lines between the keypad and the camera.

Preferably, the controller comprises a single switch configured to place an active state on said plurality of control lines.

Moreover, it is envisaged that the active state may be around a predetermined level, for example, 0V or 5V, 10V or the like. It is also envisaged that a neutral state may be a floating level, i.e. is not set to any particular level

An embodiment of the present invention will now be described, by way of example only, and with reference to Figure 4 to 10 of the accompanying drawings, in which:
Figure 1 is a block diagram of a known surveillance system;
Figure 2 is a schematic illustrating a process of applying remote control signals output from the remote controller shown in Figure 1 to a main control part using a remote control signal controller;
Figure 3 is a flowchart illustrating a process of controlling a camera by selecting manipulation buttons provided on the remote controller;
Figure 4 is a block diagram illustrating a surveillance system according to an embodiment of the present invention;
Figure 5 is a block diagram illustrating the surveillance system which controls a camera in accordance with control commands generated by combining a plurality of remote control signals output from a remote controller according to an embodiment of the present invention;
Figure 6 is a schematic illustrating the remote controller of Figure 5;
Figures 7 and 8 are flowcharts illustrating a method for controlling a camera in accordance with control commands made by combining a plurality of remote control signals output from a remote controller according to an embodiment of the present invention;
Figure 9 is a block diagram illustrating a method for controlling a camera in accordance with control commands made by combining a plurality of remote control signals output from a remote controller according to another embodiment of the present invention; and
Figure 10 is a schematic illustrating the remote controller of Figure 9.

Throughout the drawings, like reference numerals will be understood to refer to like parts, components and structures.

Functions or constructions well known to those skilled in the art are not described since they would obscure the invention in unnecessary detail.

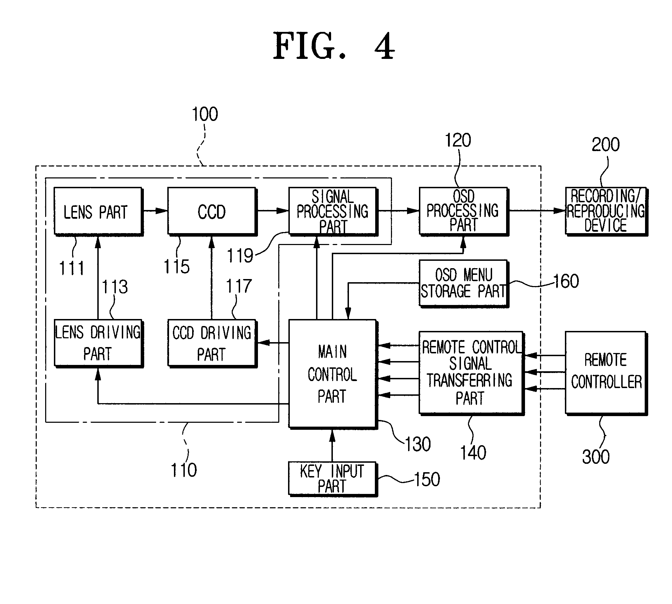

Referring to Figure 4, the surveillance system includes a camera 100, a recording/reproducing device 200 and a remote controller 300.

The camera 100 converts an image incident through a lens into an electrical, image, signal, and provides the image signal to the recording/reproducing device 200. The camera 100 also controls respective modules in accordance with a user's control commands input using a keypad 150 or the remote controller 300. The camera 100 includes an image capture device 110, an OSD (On Screen Display) processing part 120, a main control part 130, a remote control signal controller 140, the keypad 150, and an OSD menu storage part 160.

The image capture device 110 converts the image incident through the lens into the electrical image signal. The electrical image signal is then output. The image capture device 110 includes a lens 111, a lens driving part 113, a CCD (Charge Coupled Device) 115, a CCD driving part 117, and a signal processing part 119.

The CCD 115 converts the image incident through the lens 111 into the electrical image signal. The lens driving part 113 and the CCD driving part 117 drive the lens 111 and the CCD 115, respectively, under the control of the main control part 130. Specifically, the lens driving part 113 is provided with a zooming motor for controlling the lens 111 for zooming in and out, a focusing motor for controlling the lens 111 for focussing on objects in the near and far distance, and an iris motor for controlling an iris provided in the lens 111 which adjusts the quantity of light incident on the CCD 115.

The signal processing part 119, under the control of the main control part 130, removes noise from the output signal of the CCD 115 (which is in an analogue form), adjusts the gain of the output from the CCD 115 so as to keep the level of the signal constant, and converts the signal into a digital signal. The signal processing part 119 also adjusts the luminance value, the chrominance value, and other such values, adjusts the image size (i.e., applies a digital zoom), and compresses the digital image signal using MPEG. An MPEG signal is thus generated.

The OSD processing part 120 overlays an OSD menu onto the image signal provided from the image capture device 110 under the control of the main control part 130. Specifically, if a user inputs a command to display a menu, related information, or other such information using the keypad 150 or the remote controller 300, the main control part 130, which receives this command, reads a corresponding OSD menu, display characters and so forth, from the OSD menu storage part 160. The information read from the OSD menu storage part 160 is provided to the OSD processing part 120. The OSD processing part 120 then overlays the OSD menu and/or the display characters on the image provided from the image capture device 110.

The main control part 130 receives the user's control commands through the keypad 150 or the remote controller 300, and controls the operation of the image capture device 110 and the OSD processing part 120 accordingly.

The remote control signal controller 140 provides remote control signals, which have been output from the remote controller 300, to the main control part 130.

The recording/reproducing device 200 receives the image signal output from the camera 100, and displays the image signal on a display or records the image signal on a recording medium.

The remote controller 300 allows the user to input commands. The remote controller 300 is provided with a plurality of buttons.

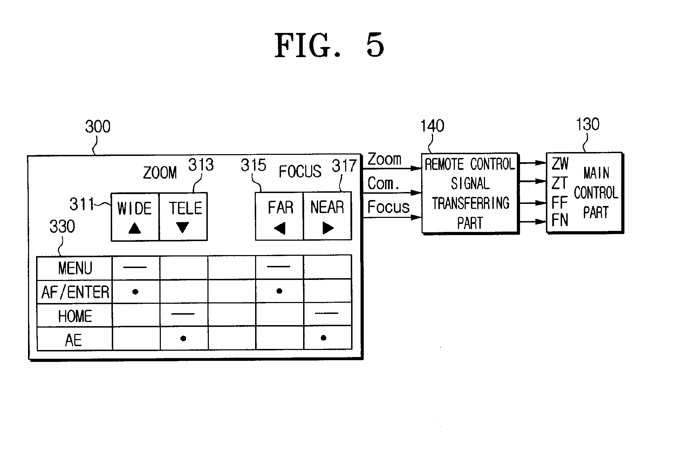

Hereinafter, the process of transferring the control commands, which have been input by the user using the remote controller 300, to the main control part 130. Also, the process of controlling the image capture device 110 by the main control part 130 that has received the control commands, will be described in greater detail with reference to Figures 5 to 8.

Figure 5 is a block diagram illustrating a surveillance system which controls a camera 100 in accordance with commands generated by combining a plurality of button presses using the remote controller 300 in accordance with an embodiment of the present invention. According to the remote controller 300 as illustrated in Figure 5, unlike the remote controller 30 of Figure 2, two of the buttons 311 to 317 can be pressed simultaneously, which provide further options to the user. This will be explained hereinafter. Additionally, each of the buttons 311 to 317 have two control commands. The two control commands are marked on buttons 311 to 317. For example, on buttons 311 to 317 of the remote controller 300, symbols are marked as "▲", "▼", " 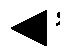 " and " 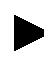 " for outputting a cursor movement command as well as the "WIDE", "TELE", "FAR" and "NEAR" commands.

As mentioned above, unlike the remote controller 30 as shown in Figure 2, the remote controller 300 of Figure 5 enables simultaneous selection of two or more of the plurality of buttons 311 to 317 to provide further options to the user. Located in a grid positioned beneath the buttons 311 to 317 of the remote controller 300, button guide information 330 is marked. Button guide information 330 provides information on control commands/functions input when two manipulation buttons are simultaneously selected. The button guide information 330 has a symbol "•" which indicates that the button is to be pressed for a short time, and a symbol "―" which indicates that the button is to be pressed for a long time.

According to the button guide information 330, a menu display command is output from the remote controller 300 if the "WIDE ▲" button 311 and the "FAR 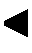 " button 315 are simultaneously pressed for a long time, while an auto-focusing (AF) setting command is output if the "WIDE ▲" button 311 and the "FAR 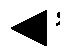 " button 315 are simultaneously pressed for a short time. In the case where a menu is displayed, an "enter" command is provided by executing an "AF/ENTER" command when the cursor is placed where required in the menu. The cursor is moved using the appropriate button 311 to 317. Also, a default (i.e., HOME) command is provided for restoring a factory set value of each module provided in the image capture device 110 if the "TELE ▼" button 313 and the "NEAR 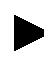 " button 317 are simultaneously pressed for a long time. An auto-exposure (AE) command is output if the "TELE ▼" button 313 and the "NEAR 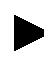 " button 317 are simultaneously pressed for a short time. These are merely example commands and others may be generated.

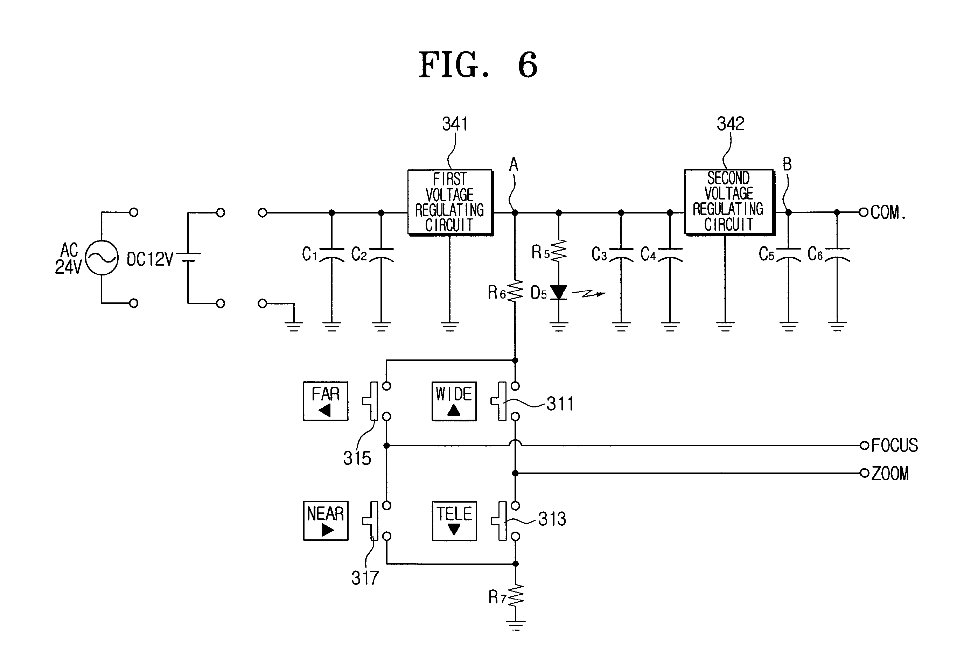

Figure 6 is a schematic diagram illustrating the remote controller 300 of Figure 5. The remote controller 300 can use any number of power supplies, such as a power supply of 24V AC or 12V DC. First and second voltage regulating circuits 341 and 342 output constant voltages even if the load is varied. In the embodiment of the present invention, a voltage of 10V is output from the first voltage regulating circuit 341, and a voltage of 5V is output from the second voltage regulating circuit 342. Accordingly, the voltage at node A is 10V, and the voltage at node B is 5V. Therefore, a voltage of 5V is applied to the "Com." terminal.

The first to sixth capacitors C₁ to C₆ are bypass capacitors for removing noise components. A fifth diode D₅ (an LED) is turned on when the power is supplied, so as to inform a user that the remote controller 300 is turned on.

If only the "WIDE ▲" button 311 is pressed, a voltage of 10V, which is the same as the voltage at node A, is applied to the "Zoom" terminal. Accordingly, the voltage difference between the "Zoom" terminal and the "Com." terminal of the remote control signal controller 140 is +5V (i.e., 10V-5V = +5V). This causes a logic level low signal to be input to the "ZW (Zoom_Wide)" terminal of the main control part 130, and a logic level high signal to be input to other terminals (as per Table 1).

If only the "TELE ▼" button 313 is pressed, a voltage of 0V is applied to the "Zoom" terminal. Accordingly, the voltage difference between the "Zoom" terminal and the "Com." terminal of the remote control signal controller 140 is -5V (i.e., 0V-5V = -5V). This causes a logic level low signal to be input to the "ZT (Zoom_Tele)" terminal of the main control part 130, and a logic level high signal to be input to the other terminals.

If only the "FAR 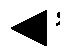 " button 315 is pressed, a voltage of 10V, which is the same as the voltage of the node A, is applied to the "Focus" terminal. Accordingly, the voltage difference between the "Focus" terminal and the "Com." terminal of the remote control signal controller 140 becomes +5V (i.e., 10V-5V = +5V). This causes a logic level low signal to be input to the "FF (Focus_Far)" terminal of the main control part 130, and a logic level high signal to be input to other terminals.

If only the "NEAR 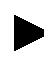 " button 317 is pressed, a voltage of 0V is applied to the "Focus" terminal. Accordingly, the voltage difference between the "Focus" terminal and the "Com." terminal of the remote control signal transferring part 140 is -5V (i.e., 0V-5V = -5V), and this causes a logic level low signal to be input to the "FN (Focus_Near)" terminal of the main control part 130, and a logic level high signal to be input to the other terminals.

If the "WIDE ▲" button 311 and the "FAR 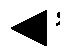 " button 315 are simultaneously pressed, the voltage difference between the "Zoom" terminal and the "Com." terminal, and the voltage difference between the "Focus" terminal and the "Com." terminal of the remote control signal controller 140 is +5V. This causes a logic level low signal to be input to the "ZW" terminal and the "FF" terminal of the main control part 130, and a logic level highl signal to be input to other terminals.

If the "TELE ▼" button 313 and the "NEAR 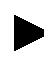 " button 317 are simultaneously pressed, the voltage difference between the "Zoom" terminal and the "Com." terminal, and the voltage difference between the "Focus" terminal and the "Com." terminal of the remote control signal controller 140 is -5V. This causes a logic level low signal to be input to the "ZT" terminal and the "FN" terminal of the main control part 130, and a logic level high signal to be input to other terminals.

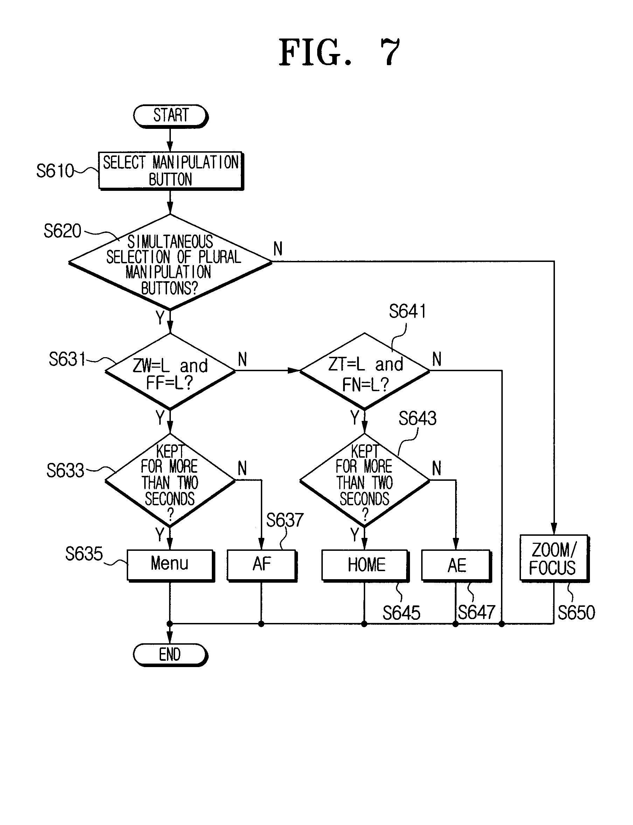

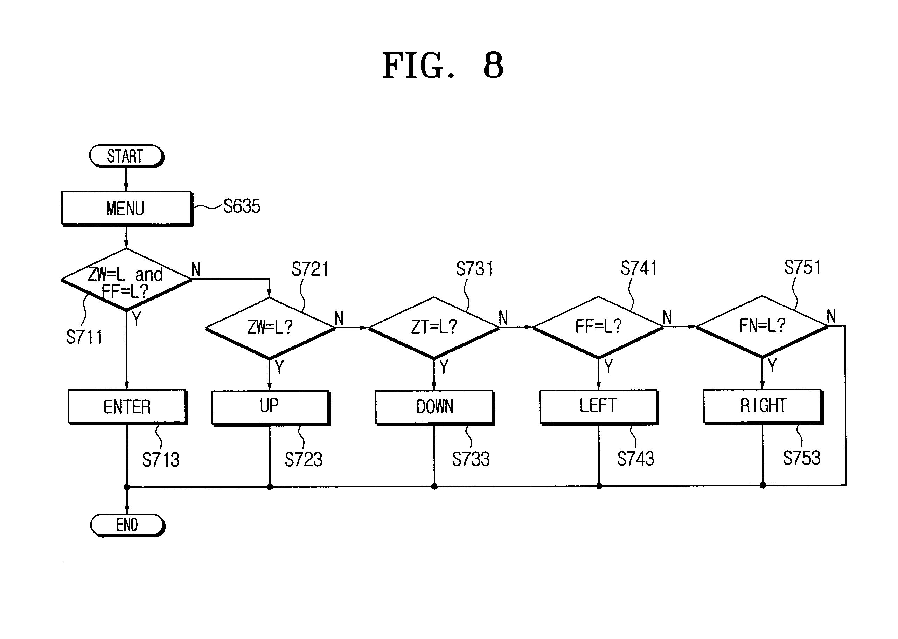

Hereinafter, with reference to Figures 7 and 8, a process of controlling the photographing part 110, which is performed by the main control part 130 that has received control commands, will be described in greater detail.

Referring to Figure 7, if a user selects one of the buttons 311 to 317 provided on the remote controller 300 to send a control command to the surveillance system 100, a low-level signal is input to the corresponding terminal of the main control part 130 at step S610.

If two or more buttons are simultaneously pressed at step S610, and a logic level low signal is simultaneously input to two or more terminals of the main control part 130 at step S620, the main control part 130 determines which of the terminals the logic level low signal has been input to. If the "WIDE ▲" button 311 and the "FAR 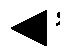 " button 315 of the remote controller 300 are simultaneously pressed, the voltage difference between the "Zoom" terminal and the "Com." terminal, and the voltage difference between the "Focus" terminal and the "Com." terminal of the remote control signal controller 140 is +5V. This causes a logic level low signal to simultaneously appear on the "ZW" terminal and the "FF" terminal of the main control part 130 at step S631. The main control part 130 checks the time for which the logic level low signal appears on the "ZW" terminal and the "FF" terminal.

If the "WIDE ▲" button 311 and the "FAR 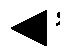 " button 315 of the remote controller 300 are simultaneously selected (i.e., pressed) for more than a predetermined time (for example, two seconds), and so the logic level low signal continuously appears on both the "ZW" terminal and the "FF" terminal of the main control part 130 for more than the predetermined time at step S633, the main control part 130 recognizes this as the menu display command. Accordingly, the main control part 130 reads out the corresponding OSD menu from the OSD menu storage part 160, and provides the OSD menu to the OSD processing part 120. In this case, the OSD processing part 120 overlays the OSD menu on the image provided by the image capture 110 and outputs the overlaid images to the recording/reproducing device 200, so that the user can interface with the OSD menu at step S635.

By contrast, if the low-level signal is input to both the "ZW" terminal and the "FF" terminal of the main control part 130 for less than the predetermined time at step S633, the main control part 130 recognizes this as an auto-focusing (AF) command. Accordingly, the main control part 130 performs the AF by automatically controlling the focus motor provided in the lens driving part 113 at step S637.

If the "TELE ▼" button 313 and the "NEAR 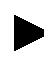 " button 317 of the remote controller 300 are simultaneously selected at step S610, and the voltage difference between the "Zoom" terminal and the "Com." terminal, and the voltage difference between the "Focus" terminal and the "Com." terminal of the remote control signal controller 140 become -5V thus causing the logic level low signal to be simultaneously input to the "ZT" terminal and the "FN" terminal of the main control part 130 at step S641, the main control part 130 checks the time for which the logic level low signal appears on the "ZT" terminal and the "FN" terminal.

If the "TELE ▼" button 313 and the "NEAR 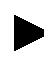 " button 317 of the remote controller 300 are simultaneously selected (i.e., pressed) for more than a predetermined time (for example, two seconds), thus the logic level low signal continuously appears on both the "ZT" terminal and the "FN" terminal of the main control part 130 for more than the predetermined time at step S643, the main control part 130 recognizes this as a restoration (HOME) command. Accordingly, the main control part 130 resets (i.e., restores) factory set values of respective modules provided in the camera 110 to default values at step S645.

By contrast, if the logic level low signal appears at both the "ZT" terminal and the "FN" terminal of the main control part 130 for less than the predetermined time at step S643, the main control part 130 recognizes this as an auto-exposure (AE) command. Accordingly, the main control part 130 performs the AE by automatically controlling the iris motor provided in the lens driving part 113 at step S647.

If only one button is selected at step S610, the main control part 130 controls zoom and focus according to the input control commands at step S650, the detailed process of which is the same as that as illustrated in Figure 3.

Hereinafter, the operation performed by selecting the buttons of the remote controller 300 when the menu is displayed through the recording/reproducing device 200 at step S635 will be explained with reference to Figure 8.

If the "WIDE ▲" button 311 and the "FAR 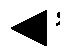 " button 315 of the remote controller 300 are simultaneously pressed, and the voltage difference between the "Zoom" terminal and the "Com." terminal, and the voltage difference between the "Focus" terminal and the "Com." terminal of the remote control signal controller 140 is +5V thus causing a logic level low signal to simultaneously appear on the "ZW" terminal and the "FF" terminal of the main control part 130 at step S711 when the menu is displayed through the recording/reproducing device 200 at step S635, the main control part 130 recognizes this as an enter command for selecting/executing a menu item which the cursor is highlighting in the menu. The main control part 130 then performs the enter command at step S713.

If a lower, drop down, menu exists which is dependent on the selected menu item, the main control part 130 reads out the lower menu from the OSD menu storage part 160 and provides the lower menu to the OSD processing part 120. The lower menu is displayed through the recording/reproducing device 200. If a lower menu does not exist, the main control part 130 performs the operation corresponding to the menu item.

If the "WIDE ▲" button 311 on the remote controller 300 is selected, the voltage difference between the "Zoom" terminal and the "Com." terminal of the remote control signal controller 140 becomes +5V thus causing a logic level low signal to appear on the "ZW" terminal of the main control part 130 at step S721, the main control part 130 recognizes this as a command for moving the cursor displayed on the menu upward, and controls the OSD processing part 120 to move the cursor upward at step S723.

If the "TELE ▼" button 313 on the remote controller 300 is selected, the voltage difference between the "Zoom" terminal and the "Com." terminal of the remote control signal controller 140 is -5V thus causing the logic level low signal to appear on the "ZT" terminal of the main control part 130 at step S731, the main control part 130 recognizes this as a command for moving the cursor displayed on the menu downward, and controls the OSD processing part 120 to move the cursor downward at step S733.

If the "FAR 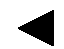 " button 315 of the remote controller 300 is selected, the voltage difference between the "Focus" terminal and the "Com." terminal of the remote control signal controller 140 is +5V thus causing the logic level low signal to appear on the "FF" terminal of the main control part 130 at step S741, the main control part 130 recognizes this as a command for moving the cursor displayed on the menu to the left, and controls the OSD processing part 120 to move the cursor to the left at step S743.

If the "NEAR 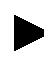 " button 317 on the remote controller 300 is selected, the voltage difference between the "Focus" terminal and the "Com." terminal of the remote control signal controller 140 becomes -5V thus causing the logic level low signal to appear on the "FN" terminal of the main control part 130 at step S751, the main control part 130 recognizes this as a command for moving the cursor displayed on the menu to the right, and controls the OSD processing part 120 to move the cursor to the right at step S753.

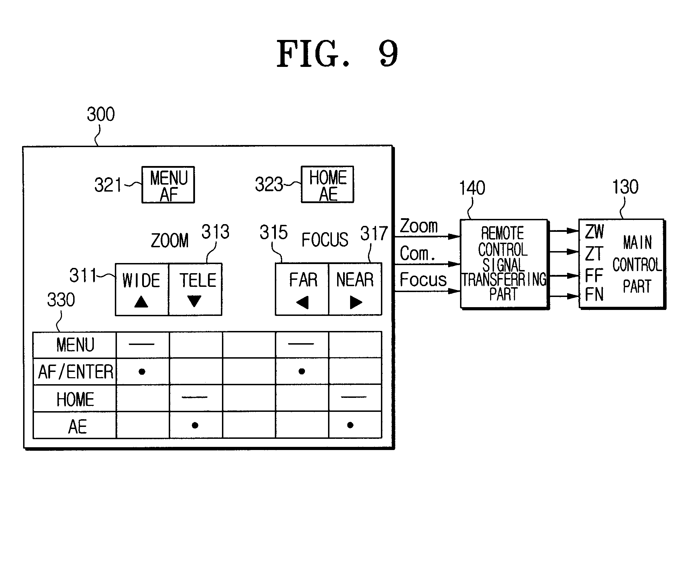

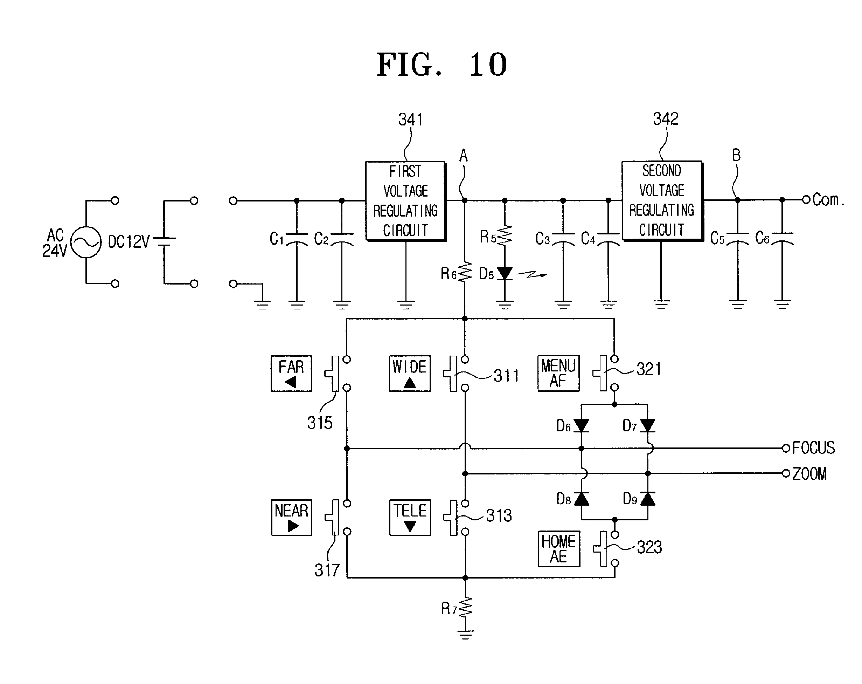

Hereinafter, a method for controlling a camera in accordance with control commands made by pressing a plurality of buttons on a remote controller according to another embodiment of the present invention will be described in greater detail with reference to Figures 9 and 10.

The remote controller 300 of Figure 9 is provided with an additional "MENU/AF" button 321 and a "HOME/AE" button 323 in comparison to the remote controller 300 of Figure 5. If the user selects the "MENU/AF" button 321, a control command is output which is the same as that provided in the case where the "WIDE ▲" button 311 and the "FAR 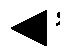 " button 315 of the remote controller 300 are simultaneously pressed. If the user selects the "HOME/AE" button 323, a control command is output which is the same as that provided in the case where the "TELE ▼" button 313 and the "NEAR 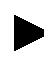 " button 317 of the remote controller 300 are simultaneously pressed.

Hereinafter, the process of transferring control commands to the main control part 130 when the user presses the "MENU/AF" button 321 or the "HOME/AE" button 323 will be described in greater detail with reference to Figure 10. The circuit of the remote controller 300 of Figure 10 is provided with the additional "MENU/AF" button 321, the "HOME/AE" button 323, and the sixth to ninth diodes D₆ to D₉ when compared to the circuit of the remote controller 300 of Figure 6.

When the "MENU/AF" button 321 is pressed, the sixth diode D₆ and the seventh diode D₇ are turned on, and a voltage of 10V, which is the same as the voltage at node A, is applied to the "Zoom" terminal and the "Focus" terminal. Accordingly, the voltage difference between the "Zoom" terminal and the "Com." terminal, and the voltage difference between the "Focus terminal and the "Com." terminal of the remote control signal controller 140 is +5V (i.e., 10V-5V = +5V), and this causes a logic level low signal to be fed to the "ZW" terminal and the "FF" terminal of the main control part 130, and a logic level high signal to be fed to other terminals.

Accordingly, a control command is output from the remote controller 300 which is the same as that provided in the case where the "WIDE ▲" button 311 and the "FAR 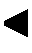 " button 315 of the remote controller 300 of Figure 6 are simultaneously pressed, and thus, the step S631 of Figure 7 is performed.

If the "MENU/AE" button 323 is pressed, the eighth diode D₈ and the ninth diode D₉ are turned on, and a voltage of 0V is applied to the "Zoom" terminal and the "Focus" terminal. Accordingly, the voltage difference between the "Zoom" terminal and the "Com." terminal, and the voltage difference between the "Focus terminal and the "Com." terminal of the remote control signal controller 140 is -5V (i.e., 0V-5V = -5V), and this causes a logic level low signal to appear on the "ZT" terminal and the "FN" terminal of the main control part 130, and a logic level high signal to appear on other terminals. Accordingly, a control command is output from the remote controller 300 which is the same as that provided in the case where the "TELE ▼" button 313 and the "NEAR 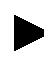 " button 317 of the remote controller 300 of Figure 6 are simultaneously pressed, and thus, the step S641 of Figure 7 is performed.

As described above, by selecting only one button, a control command can be output which is the same as that provided in the case where two manipulation buttons are simultaneously selected. Although the number of buttons on the remote controller 300 are increased, there is no change in the number of terminals allocated for inputting remote control signals to the main control part 130. Therefore, the embodiments of the present invention can be implemented using the remote controller 300 only. Since control commands which are frequently input by the user using only one button, any inconvenience caused to the user by simultaneously pressing two buttons can be prevented.

Referring again to Figure 7, the simultaneous pressing of two buttons was described in order to output the control commands "Menu", "AF", "Home" and "AE", and not the control commands corresponding to respective buttons 311 to 317 provided on the remote controller 300. However, it is also possible to output the control commands "Menu", "AF", "Home" and "AE" by pressing only one button for more than a predetermined time (for example, more than two seconds).

Also, referring to Figure 7, only an example implementation is provided using the "WIDE ▲" button 311 and the "FAR 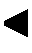 " button 315 of the remote controller 300, and an example implementation is provided using the "TELE ▼" button 313 and the "NEAR 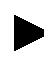 " button 317 of the remote controller 300. However, it is also possible to output control commands by simultaneously pressing the "WIDE ▲" button 311 and the "NEAR 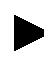 " button 317, or simultaneously pressing the "TELE ▼" button 313 and the "FAR 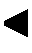 " button 315.

As described above, according to the present invention, control commands can be input to a camera using a remote controller provided with a plurality of buttons, and the camera can perform an operation in accordance with a new control command created by analysing a plurality of remote control signals input to the camera produced when a plurality of buttons are simultaneously pressed. Accordingly, in the event that the camera is located at a remote location, such as on a ceiling of a building, the inconvenience caused by the user having to use the keypad or using a serial communication between the user's PC and the camera can be prevented. Also, there is no requirement to increase the number of terminals allocated to receive the remote control signals of the main control part in order to input more control commands using the remote controller.

## Claims

1. A camera system comprising:
a camera (100); and
a controller (300) for said camera (100) comprising user input means (311, 313, 315, 317) and a plurality of control signal lines (zoom, com., focus) which can each adopt a plurality of active states and a neutral state in dependence on the operation of the user input means (311, 313, 315, 317),
**characterised in that**
the camera (100) is configured to be responsive to a plurality of said control signal lines (zoom, com., focus) being in active states concurrently to enter temporarily a secondary command input mode in which the camera (100) is responsive to individual ones of said control lines (zoom, com., focus) being in the active states to perform an associated function, said associated function being different from a function associated with the same individual control line state when the camera (100) is not in said secondary command input mode.

2. A camera system according to claim 1, wherein the controller (300) comprises a single switch (321, 323) .configured to place an active state on said plurality of control lines (zoom, com., focus).

3. A photographing system comprising:
a photographing part for converting an optical signal incident through a lens part into an electric signal, and for outputting an image signal created through a specified signal process of the converted electric signal;
an input part, comprising first and second manipulation buttons for inputting first and second control commands, respectively, by selecting at least one of the first and second manipulation buttons; and
a control part for controlling the photographing part in accordance with any one of the first and second control commands if the corresponding one of the first and second manipulation buttons is selected, and controlling the photographing part in accordance with a third control command if both the first and second manipulation buttons are selected.

4. The photographing system as claimed in claim 3, wherein the control part controls the photographing part in accordance with a fourth control command if both the first and second manipulation buttons are continuously selected for more than a predetermined time.

5. The photographing system as claimed in claim 4, wherein the input part further comprises a third manipulation button for inputting any one of the third and fourth control commands; and
wherein the control part controls the photographing part in accordance with the third control command if the third manipulation button in the input part is selected for less than a predetermined time, and wherein the control part controls the photographing part in accordance with the fourth control command if the third manipulation button is continuously selected for more than the predetermined time.

6. The photographing system as claimed in claim 4, wherein the control part controls the photographing part in accordance with the third control command if the first manipulation button is continuously selected for more than a predetermined time, and wherein the control part controls the photographing part in accordance with the fourth control command if the second manipulation button is continuously selected for more than the predetermined time.

7. The photographing system as claimed in claim 3, wherein the third control command comprises one of a menu display command, a restoration command for restoring an environment setting value of the photographing part to a basic value, an auto-focusing setting command and an auto-exposure setting command.

8. The photographing system as claimed in claim 4, wherein the fourth control command comprises one of a menu display command, a restoration command for restoring an environment setting value of the photographing part to a basic value, an auto-focusing setting command and an auto-exposure setting command.

9. A method for controlling a photographing system having a photographing part for converting an optical signal incident through a lens part into an electric signal and for outputting an image signal created through a specified signal process of the converted electric signal, and an input part comprising first and second manipulation buttons, the method comprising the steps of:
a) selecting at least one of the first and second manipulation buttons for inputting first and second control commands;
b) controlling the photographing part in accordance with any one of the first and second control commands if the corresponding one of the first and second manipulation buttons is selected at step a); and
c) controlling the photographing part in accordance with a third control command if both the first and second manipulation buttons are selected at step a).

10. The method as claimed in claim 9, further comprising the step of:
d) controlling the photographing part in accordance with a fourth control command if both the first and second manipulation buttons are continuously selected for more than a predetermined time at step a).

11. The method as claimed in claim 10, wherein the input part further comprises a third manipulation button for inputting any one of the third and fourth control commands and wherein the method further comprises the steps of:
e) controlling the photographing part in accordance with the third control command if the third manipulation button in the input part is selected for less than a predetermined time at step a); and
f) controlling the photographing part in accordance with the fourth control command if the third manipulation button is continuously selected for more than the predetermined time at step a).

12. The method as claimed in claim 10, further comprising the steps of:
g) controlling the photographing part in accordance with the third control command if the first manipulation button is continuously selected for more than a predetermined time; and
h) controlling the photographing part in accordance with the fourth control command if the second manipulation button is continuously selected for more than the predetermined time.

13. The method as claimed in claim 9, wherein the third control command comprises one of a menu display command, a restoration command for restoring an environment setting value of the photographing part to a basic value, an auto-focusing setting command and an auto-exposure setting command.

14. The method as claimed in claim 10, wherein the fourth control command comprises one of a menu display command, a restoration command for restoring an environment setting value of the photographing part to a basic value, an auto-focusing setting command and an auto-exposure setting command.
